(19) Europäisches Patentamt
European Patent Office
Office européen des brevets

(11) Publication number: **0 282 613 B1**

(12) # EUROPEAN PATENT SPECIFICATION

(45) Date of publication of patent specification: **03.07.91**

(51) Int. Cl.5: **A01N 47/36**, //(A01N47/36, 43:70)

(21) Application number: **87103832.9**

(22) Date of filing: **17.03.87**

Divisional application 89120579.1 filed on 17/03/87.

(54) **Herbicidal composition.**

(43) Date of publication of application:
**21.09.88 Bulletin 88/38**

(45) Publication of the grant of the patent:
**03.07.91 Bulletin 91/27**

(84) Designated Contracting States:
**AT BE CH DE ES FR GB GR IT LI LU NL SE**

(56) References cited:
**US-A- 4 668 277**

**CHEMICAL ABSTRACTS, vol. 107, no. 13, 28th September 1987, page 230, abstract no. 111108p, Columbus, Ohio, US; T. IGAI: "Synergistic herbicides containing pyrazolesulfonylureas"**

**CENTRAL PATENT INDEX, Basic Abstracts Journal, Section C, Week 8714, 3rd June 1987, Derwent Publications Ltd, London, GB, & JP-A-87048604**

**CENTRAL PATENTS INDEX, Basic Abstracts Journal, Section C, Week 8620, 9th July 1986, Derwent Publications Ltd, London, GB; & JP-A-86065804**

(73) Proprietor: **NISSAN CHEMICAL INDUSTRIES LTD.**
**7-1, Kanda-Nishikicho 3-chome Chiyoda-ku**
**Tokyo(JP)**

(72) Inventor: **Ikai, Takasi**
**7-19-7, Nishi-shinjuku Shinjuku-ku**
**Tokyo(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

**EP 0 282 613 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a herbicidal composition comprising, as active ingredients, a compound represented by the following formula I which is hereinafter referred to as Compound (I),:

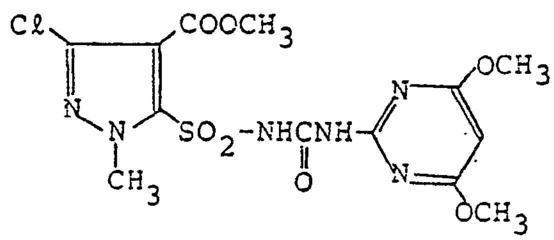

I

and at least one compound selected from 2-chloro-4-ethylamino-6-isopropylamino-1,3,5-triazine (common name: atrazine) or 2-chloro-4-(1-cyano-1-methylethylamino)-6-ethylamino-1,3,5-triazine (common name: cyanazine).

By researches and developments of herbicides over many years, various chemicals have been put to practical use and these herbicides have contributed to labor-saving in works for controlling weeds or improvements of productivity of crops in agriculture and horticulture. Even in these days, developments of novel chemicals having more excellent herbicidal characteristics are demanded. Particularly, while a herbicide for agriculture and horticulture is desired to control only target weeds selectively at a lower dose without having phytotoxicity on crops, the existing chemicals do not necessarily satisfy this requirement.

Compound (I) disclosed in JP-A-85 208 977 exhibits an excellent herbicidal effect at a lower dose as compared with herbicides of the prior art, and yet has high safety to crops such as corn, wheat, etc. Also, it exhibits excellent effect not only to annual grass weeds and annual broad leaf weeds but also exhibits potent effectiveness to perennial weeds, and therefore its usefulness is of great value.

Further, atrazine and cyanazine, which are known in the art, are used for annual grass weeds such as barnyardgrass (Echinochloa crus-galli), Green foxtail (Setaria Viridis), Large crabgrass (Digitaria sanguinalis), etc., and annual broad leaf weeds in higher doses as compared with Compound (I). As a consequence, broad leaf weeds and perennial weeds which are resistant to these chemicals and can be controlled with difficulty by these chemicals are increasing, and therefore improvement thereof has been desired.

### SUMMARY OF THE INVENTION

The present inventor has made studies in order to increase the herbicidal effect of Compound (I), and consequently found that by incorporating Compound (I) with atrazine or cyanazine, which have been conventionally used, the herbicidal effects of the respective compounds can be obtained not only additively, but also a synergistic weed killing effect appears, to accomplish the present invention.

### DETAILED DESCRIPTION OF THE PREFERRED EMBODIMENTS

This synergistic effect is great and, by use of the composition according to the present invention, annual weeds as well as perennial weeds, can be completely controlled at a lower dose without having phytotoxicity on corn, and therefore usefulness of this invention is great. Also, by use of a mixture described above, it becomes possible to reduce the dose of atrazine or cyanazine, to be used which are contained in the composition of the present invention and usefulness of the present invention is very high.

Further, the herbicidal composition of the present invention has also its effect by treatment either before or after emergence of weeds, and therefore a high effect can be obtained even by soil treatment or treatment of both callus and soil. Also, it is useful for various crops in addition to corn, and it is applicable for control of various weeds in other fields of agriculture and horticulture such as cultivated fields and fruit gardens and non-crop lands such as athletic fields, vacant lands, forest lands, tank yards, railroad edges, etc., and it can exhibit a great economical effect in controlling weeds.

The composition according to the present invention generally contains 0.001 to 50 parts by weight of Compound (I) per one part by weight of atrazine or cyanazine, although it may differ depending on the relative activities of the respective components.

In many cases, the best advantage of the mixed herbicides of the present invention can be obtained when the proportion of Compound (I) is lower than that of the other herbicide, for example, Compound (I) is used in an amount of 0.001 to 0.5 parts by weight per 1 part by weight of atrazine or cyanazine.

The dose of the mixture to be applied, which may depend on a large number of factors such as the kinds of species of target plants of which growth is to be inhibited, may be generally suitably 0.01 to 10 kg/ha as an active ingredient. Those skilled in the art can determine easily an appropriate use rate according to a standardized conventional test without carrying out a lot of experiments.

The composition of the present invention should be preferably used in the form of a composition comprising the active ingredients mixed with a carrier comprising a solid or liquid diluent. The composition may preferably further contain a surfactant.

In using the composition of the present invention as a herbicide, the composition may generally be used by mixing it with a suitable carrier, for example, a solid carrier such as clay, talc, bentonite, diatomaceous earth, etc., or a liquid carrier such as water, alcohols (methanol, ethanol, etc.), aromatic hydrocarbons (benzene, toluene, xylene, etc.), chlorinated hydrocarbons, ethers, ketones, esters (ethyl acetate, etc.), acid amides (dimethylformamide, etc.). The composition may optionally contain an emulsifying agent, a wetting agent, a dispersant, a binder, a penetrant, a spreader, a stabilizer, etc. and can be put to practical use in any form of preparation such as emulsifiable concentrate, soluble concentrate, wettable powder, dust, granule, suspension concentrate, etc.

The synergistic herbicidal effect of the herbicide mixture may be explained as follows. That is, individual active compounds may exhibit respective defects in herbicidal activity in many cases. In such a case, when the herbicidal activity obtained by combination of two kinds of active compounds becomes greater than the simple sum of the respective activities of the two kinds of the compounds (expected activity), this is called synergistic action. The activity expected from a specific combination of two kinds of herbicides can be calculated as follows (see Colby, S. R. Calculating synergistic and Antagonistic Response of Herbicide combinations, "Weed", Vol. 15, P. 20 to 22, 1967)

$$E = \alpha + \beta - \frac{\alpha \cdot \beta}{100}$$

$\alpha$: the percent inhibition of growth by herbicide A at a Kg/ha;
$\beta$: the percent inhibition of growth by herbicide B at b Kg/ha;
E: the expected percent inhibition of growth by herbicides A + a at a + b Kg/ha.

Thus, when the observed response is greater than expected, the combination is synergistic.

The present invention is described in more detail by referring to the following examples, but the compounds, amounts of preparations, forms of preparations, etc., in the present invention are not limited only to these examples.

In examples, all the "part(s)" mean part(s) by weight.

Formulation example 1 Wettable powder

| | | |
|---|---|---|
| Compound (I) | ........ | 2.5 parts |
| Atrazine | ........ | 47.5 parts |
| Zeeklite A | ........ | 42 parts |
| (kaolin type clay; trade name, produced by Zeeklite Kogyo Co., Ltd.) | | |
| Sorpol 5039 | ........ | 2 parts |

(alkylether sulfate; trade name, produced by Toho Kagaku Co., Ltd.)

| | | | |
|---|---|---|---|
| Soybean oil | ........ | 2 | parts |
| Carplex (anticaking agent) | ...... | 4 | parts |

(white carbon; trade name, produced by Shionogi Seiyaku Co., Ltd.)

The above components are mixed and pulverized homogeneously to prepare a wettable powder.

Formulation example 2 Wettable powder

| | | |
|---|---|---|
| Compound (I) | ........ | 5 parts |
| Cyanazine | ........ | 55 parts |
| Zeeklite A | ........ | 32 parts |

(kaolin type clay; trade name, produced by Zeeklite Kogyo Co., Ltd.)

| | | |
|---|---|---|
| Sorpol 5039 | ........ | 2 parts |

(alkylether sulfate; trade name, produced by Toho Kagaku Co., Ltd.)

| | | |
|---|---|---|
| Soybean oil | ........ | 2 parts |
| Carplex (anticaking agent) | ...... | 4 parts |

(white carbon; trade name, produced by Shionogi Seiyaku Co., Ltd.)

The above components are mixed and pulverized homogeneously to prepare a wettable powder.

Formulation example 3 Flowable

| | | |
|---|---|---|
| Compound (I) | ........ | 2 parts |
| Atrazine | ........ | 24 parts |
| Agrisol S-710 | ........ | 10 parts |
| (nonionic surfactant; trade name, produced by Kao-Atlas Co., Ltd.) | | |
| Runox 1000C | ........ | 0.5 part |
| (anionic surfactant; trade name, produced by Toho Kagaku Co., Ltd.) | | |
| 1% Rodopol water | ........ | 20 parts |
| (thickener; trade name, produced by Rohne Poulanc) | | |
| Water | ........ | 43.5 parts |

The above components are mixed homogeneously to prepare a flowable.

Formulation example 4 Flowable

| | | |
|---|---|---|
| Compound (I) | ........ | 1 part |
| Cyanazine | ........ | 24 parts |
| Agrisol S-710 | ........ | 10 parts |
| (nonionic surfactant; trade name, produced by Kao-Atlas Co., Ltd.) | | |
| Runox 1000C | ........ | 0.5 part |
| (anionic surfactant; trade name, produced by Toho Kagaku Co., Ltd.) | | |
| 1% Rodopol water | ........ | 20 parts |
| (thickener; trade name, produced by Rohne Poulanc) | | |
| Water | ........ | 44.5 parts |

The above components are mixed homogeneously to prepare a flowable.

Test example: Herbicidal effect test by soil treatment

In a plastic box having a length of 30 cm, a width of 30 cm and a depth of 10 cm, there was placed a sterile upland soil. Respective seeds of Green foxtail (Setaria Viridis), Velvetleaf (Abutilon theophrasti), Redroot pigweed (Amaranthus retroflexus) and corn (Zea mays) were sown in spots, and further tubers of Yellow nutsedge (Cyperus esculentus) were planted followed by covering soil to about 1.0 cm over the seeds. The next day, before emergence of weeds of the plants, herbicides were sprayed evenly in such a manner that the amount of active ingredient of each chemical reaches the predetermined proportion.

In spraying, the wettable powder or the flowable suitably prepared according to the formulation examples described above, were diluted with water and sprayed by means of a small sprayer. Four weeks after spraying, fresh weight of aerial part of the respective weeds were measured and a control rate (%) was determined by the following formula.

$$\text{control rate (\%)} = \left(1 - \frac{\text{fresh weight of aerial part of treated weeds}}{\text{fresh weight of aerial part of untreated weeds}}\right) \times 100$$

Table 1 shows the results of the tests in which Compound (I), atrazine and cyanazine were used singly, and Table 2 shows the results of the tests in which Compound (I) was mixed with the respective chemicals.

Table 1 Herbicidal effect of single herbicide

| Compound | Dose of active ingredient applied g/ha | control rate (%) | | | | |
|---|---|---|---|---|---|---|
| | | Z.M. | S.V. | A.T. | A.R. | C.E. |
| Compound (I) | 2.5 | 0 | 14 | 16 | 13 | 34 |
| | 10 | 0 | 24 | 48 | 46 | 80 |
| | 40 | 0 | 46 | 91 | 91 | 100 |
| atrazine | 125 | 0 | 48 | 11 | 46 | 0 |
| | 500 | 0 | 67 | 69 | 100 | 12 |
| cyanazine | 125 | 0 | 36 | 23 | 59 | 0 |
| | 500 | 0 | 79 | 69 | 100 | 12 |

(The marks in the table represents the following plants.)

Z.M. : Corn (Zea mays)

S.V. : Green foxtail (Setaria viridis)

A.T. : Velvetleaf (Abutilon theophrasti)

A.R. : Redroot pigweed (Amaranthus retroflexus)

C.E. : Yellow nutsedge (Cyperus esculentus)

Table 2 Herbicidal effect of the combination (1)

| Dose of mixed ingredient applied (g/ha) | control rate (%) | | | | | | | | | |
|---|---|---|---|---|---|---|---|---|---|---|
| | Z.M. | | S.V. | | A.T. | | A.R. | | C.E. | |
| atrazine + Compd. (I) | Vf | Vc | Vf | Vc | Vf | Vc | Vf | Vc | Vf | Vc |
| 125 + 2.5 | 0 | 0 | 83 | 55 | 61 | 25 | 88 | 53 | 71 | 34 |
| 125 + 10 | 0 | 0 | 96 | 61 | 88 | 54 | 100 | 70 | 100 | 80 |
| 125 + 40 | 0 | 0 | 99 | 72 | 100 | 92 | 100 | 95 | 100 | 100 |
| 500 + 2.5 | 0 | 0 | 100 | 71 | 100 | 74 | 100 | 100 | 85 | 42 |
| 500 + 10 | 0 | 0 | 100 | 75 | 100 | 84 | 100 | 100 | 100 | 82 |
| 500 + 40 | 0 | 0 | 100 | 82 | 100 | 97 | 100 | 100 | 100 | 100 |

In the table, Vf shows a found value and Vc shows a calculated value determined by the formula of Colby.

Table 2 Herbicidal effect of the combination (2)

| Dose of mixed ingredient applied (g/ha) | control rate (%) | | | | | | | | | |
|---|---|---|---|---|---|---|---|---|---|---|
| | Z.M. | | S.V. | | A.T. | | A.R. | | C.E. | |
| cyanazine + Compd. (I) | Vf | Vc | Vf | Vc | Vf | Vc | Vf | Vc | Vf | Vc |
| 125 + 2.5 | 0 | 0 | 76 | 45 | 69 | 35 | 100 | 64 | 75 | 34 |
| 125 + 10 | 0 | 0 | 85 | 51 | 89 | 60 | 100 | 78 | 100 | 80 |
| 125 + 40 | 0 | 0 | 91 | 65 | 100 | 93 | 100 | 96 | 100 | 100 |
| 500 + 2.5 | 0 | 0 | 100 | 82 | 100 | 74 | 100 | 100 | 83 | 42 |
| 500 + 10 | 0 | 0 | 100 | 84 | 100 | 84 | 100 | 100 | 100 | 82 |
| 500 + 40 | 0 | 0 | 100 | 89 | 100 | 97 | 100 | 100 | 100 | 100 |

In the table, Vf shows a found value and Vc shows a calculated value determined by the formula of Colby.

As is apparent from the above results, the composition of the present invention does not merely yield the sum of the respective activities of Compound (I) and the above herbicide known in the art, but possesses a greater synergistic herbicidal activity. Further, it can control selectively and completely the target weeds at a low dose.

**Claims**

Claims for the following Contracting States : AT, BE, CH, DE, FR, GB, GR, IT, LI, LU, NL, SE

1. A herbicidal composition comprising, as active ingredients, a compound represented by the following formula I:

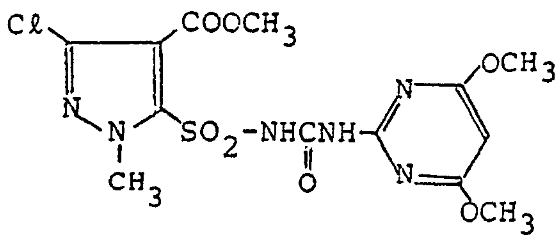

I

and at least one compound selected from 2-chloro-4-ethylamino-6-isopropylamino-l,3,5-triazine (common name: atrazine), or 2-chloro-4(1-cyano-1-methylethylamino)-6-ethylamino-1,3,5 -triazine (common name: cyanazine).

2. The herbicidal composition according to claim 1 which contains 0.001 to 50 parts by weight of the compound represented by formula I per one part by weight of atrazine or cyanazine.

3. The herbicidal composition according to claim 2 which contains 0.001 to 0.5 part by weight of the compound represented by formula I per one part by weight of atrazine or cyanazine.

Claims for the following Contracting State : ES

1. A process for preparing a herbicidial composition,
**characterized** by combining of, as active ingredients, a compound represented by the following formula

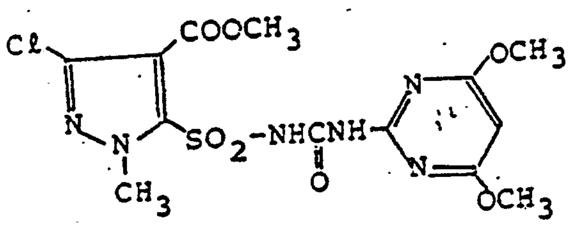

I

and at least one compound selected from 2-chloro-4-ethylamino-6-isopropylamino-1,3,5-triazine (common name: atrazine), or 2-chloro-4(1-cyano-1-methylethlyamino)-6-ethylamino-1,3,5-triazine (common name: cyanazine).

2. A process according to claim 1,
**characterized** in that 0.001 to 50 parts by weight of the compound represented by formula I are combined with 1 part by weight of atrazine or cyanazine.

3. A process according to claim 2,
**characterized** in that 0.001 to 0.5 part by weight of the compound represented by formula I are combined with 1 part by weight of atrazine or cyanazine.

**Revendications**

Revendications pour les Etats contractants suivants : AT, BE, CH, DE, FR, GB, GR, IT, LI, LU, NL, SE

1. Une composition herbicide comprenant comme ingrédients actifs un composé représenté par la formule I suivante :

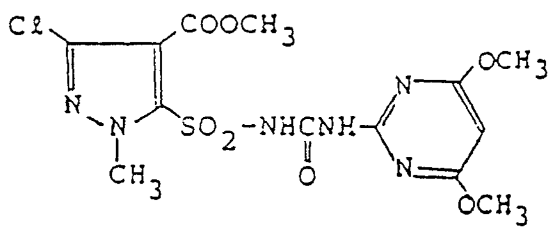

I

et au moins un composé choisi parmi la 2-chloro-4-éthylamino-6-iso-propylamino-1,3,5-triazine (nom courant : atrazine) et la 2-chloro-4-(1-cyano-1-méthyléthylamino)-6-éthylamino-1,3,5-triazine (nom courant : cyanazine).

**2.** La composition herbicide selon la revendication 1, qui contient 0,001 à 50 parties en poids du composé de formule I pour 1 partie en poids d'atrazine ou de cyanazine.

**3.** La composition herbicide selon la revendication 2, qui contient 0,001 à 0,5 partie en poids du composé de formule I pour 1 partie en poids d'atrazine ou de cyanazine.

Revendications pour l'Etat contractant suivant : ES.

**1.** Un procédé de préparation d'une composition herbicide, caractérisé en ce que l'on combine, comme ingrédients actifs, un composé représenté par la formule I suivante :

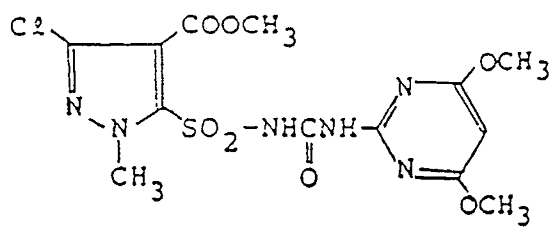

I

et au moins un composé choisi parmi la 2-chloro-4-éthylamino-6-iso-propylamino-1,3,5-triazine (nom courant : atrazine) et la 2-chloro-4-(1-cyano-1-méthyléthylamino)--6--éthylamino--1,3,5--triazine (nom courant : cyanazine).

**2.** Un procédé selon la revendication 1, caractérisé en ce que l'on combine 0,001 à 50 parties en poids du composé de formule I avec 1 partie en poids d'atrazine ou de cyanazine.

**3.** Un procédé selon la revendication 2, caractérisé en ce que l'on combine 0,001 à 0,5 partie en poids du composé de formule I pour 1 partie en poids d'atrazine ou de cyanazine.

## Ansprüche

Patentansprüche für folgende Vertragsstaaten : AT, BE, CH, DE, FR, GB, GR, IT, LI, LU, NL, SE

**1.** Herbizide Zusammensetzung, die als aktive Bestandteile eine Verbindung, die durch die folgende Formel (I) dargestellt ist:

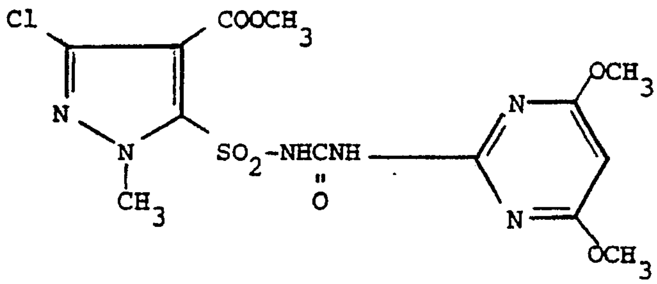

(I)

und zumindest eine Verbindung enthält, die ausgewählt ist aus 2-Chloro-4-ethylamino-6-isopropylamino-1,3,5-triazin (Handelsname: Atrazin) oder 2-Chloro-4-( 1-cyano-1-methylethylamino)6-ethylamino-1, 3,5-triazin (Handelsname: Cyanazin).

2. Herbizide Zusammensetzung nach Anspruch 1, dadurch **gekennzeichnet**, dass sie 0,001 bis 50 Gew.-Teile der Verbindung, die durch die Formel (I) dargestellt ist, pro 1 Gew.-Teil Atrazin oder Cyanazin enthält.

3. Herbizide Zusammensetzung nach Anspruch 2, dadurch **gekennzeichnet,** dass sie 0,001 bis 0,5 Gew.-Teile der durch die Formel (I) dargestellten Verbindung pro 1 Gew.-Teil Atrazin oder Cyanazin enthält.

Patentansprüche für folgenden Vertragsstaat : ES

1. Verfahren zur Herstellung einer herbiziden Zusammensetzung, **gekennzeichnet** durch die Kombination von, als aktive Bestandteile, einer Verbindung, die durch die folgende Formel (I) dargestellt ist:

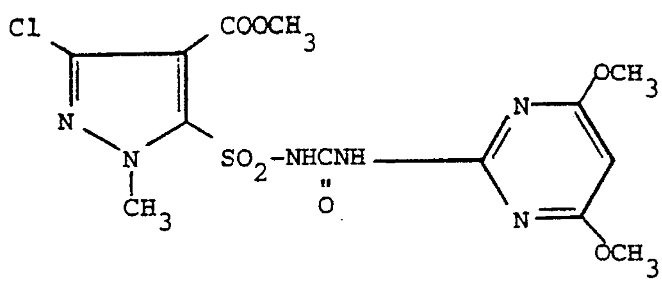

(I)

und zumindest einer Verbindung, die ausgewählt ist aus 2-Chloro-4-ethylamino-6-isopropylamino-l,3,5-triazin (Handelsname: Atrazin) oder 2-Chloro-4-(1-cyano-1-methylethylamino)-6-ethylamino-1, 3,5-triazin (Handelsname: Cyanazin).

2. Verfahren nach Anspruch 1, dadurch **gekennzeichnet**, dass 0,001 bis 50 Gew.-Teile der Verbindung, die durch die Formel (I) dargestellt ist, mit 1 Gew.-Teil Atrazin oder Cyanazin kombiniert werden.

3. Verfahren nach Anspruch 2, dadurch **gekennzeichnet**, dass 0,001 bis 0,05 Gew.-Teile der Verbindung, die durch die Formel (I) dargestellt ist, mit 1 Gew.-Teil Atrazin oder Cyanazin kombiniert werden.